# EUROPEAN PATENT APPLICATION

(11) **EP 2 276 253 A2**
(43) Date of publication of application: **19.01.2011**
(21) Application number: 09735218.1
(22) Date of filing: 24.04.2009
(51) Int. Cl.: H04N 7/173, H04H 60/46, H04N 5/445

(54) **METHOD AND APPARATUS FOR RECOMMENDING BROADCAST CONTENTS**

(30) Priority: 24.04.2008 US 71365 P; 29.10.2008 KR 20080106574
(71) Applicant: Samsung Electronics Co., Ltd., Suwon-si, Gyeonggi-do 442-742 (KR)
(72) Inventor: LEE, Hye-Soo, Yongin-si Gyeonggi-do 446-712 (KR); PARK, Hee-Seon, Yongin-si 446-712 (KR); LEE, Hyo-Won, Dublin 9 (IE); GURRIN, Cathal, Co Dublin (IE); FERGUSON, Paul, Co. Cavan (IE)
(74) Representative: Grootscholten, Johannes A.M.
(86) International application number: PCT/KR2009/002153
(87) International publication number: WO 2009/131408

(57) **Abstract**

The present invention provides a method for recommending broadcast content in a media content play-back device of a first user. The method includes the steps of: logging the broadcast content viewing pattern of the first user to generate a profile of the first user; transmitting the generated profile of the first user through a network to a server; receiving, from the server, results recommending one or more broadcast content element(s) that reflects (reflect) a preference correlation based on the profile of the first user and the profile or the profiles of one or more second users registered in an account of the first user; classifying the received results recommending broadcast content into categories by broadcasting time slots; and displaying the classified results recommending broadcast content on a screen.

## Description

### TECHNICAL FIELD

One or more embodiments relate to a method and apparatus for recommending broadcast contents in a media content play-back device of a user.

### BACKGROUND ART

A social network represents a network that horizontally broadens from oneself on the basis of the identity of each individual person. That is, based on an individual, the network adds people who have similar interests to that individual, thereby having a characteristic different from general communities.

Since personal value estimation and personal human networking significantly affect a person's social life, the social network has been highlighted on the basis of that point of view.

Since this social network is highly useful in the establishment of personal identity and for human networking, the social network increases rapidly. In this regard, recently, new internet services based on already built human-networks has been successively developed. For example, to provide a personalized recommendation service via a social network service is usefully employed to provide new music, new movies, new products, new restaurants, etc.

Meanwhile, with respect to the usage of devices such as TVs or PVRs (personal video recorders) that can record/reproduce broadcasting programs, a large number of research has been conducted to enhance a function to recommend a user preferable program from among various channels.

### DESCRIPTION OF THE DRAWINGS

FIG. 1 is a flowchart of a method of recommending broadcast contents, performed by a media content play-back device of a user, according to an embodiment;
FIG. 2 is an example of a screen for broadcast contents recommendations, according to an embodiment;
FIG. 3 is a flowchart of operational procedures in a user's media content play-back device that recommends broadcast contents according to another embodiment;
FIG. 4 is a flowchart of operational procedures for obtaining a recommendation result from a terminal according to the embodiment of FIG. 3;
FIG. 5 is a flowchart of operational procedures for obtaining a recommendation result based on buddy information from a server according to the embodiment of FIG. 3;
FIG. 6 is a block diagram of a broadcast contents recommending apparatus in a media content play-back device of a user, according to another embodiment; and
FIG. 7 is a block diagram of a broadcast contents recommending server that recommends broadcast contents to a media content play-back device of a user, according to another embodiment.

Although the drawings illustrate exemplary embodiments of the present invention, the drawings are not illustrated to scale; however, in order to fully describe the present invention, some portions of the present invention may be exaggerated in the drawings.

### DETAILED DESCRIPTION OF THE INVENTION

### TECHNICAL PROBLEM

One or more embodiments include a method and apparatus for recommending broadcast contents in a media content play-back device of a user.

### TECHNICAL SOLUTION

To achieve the above and/or other aspects, one or more embodiments may include a method of recommending broadcast contents, performed by a media content play-back device of a first user The method includes the operations of logging a broadcast contents viewing pattern of the first user to generate a profile of the first user; transmitting the generated profile of the first user through a network to an external server; receiving, from the server, results recommending one or more broadcast content element(s) that reflects (reflect) a preference correlation based on the profile of the first user and the profile or the profiles of one or more second users registered in an account of the first user; classifying the received results recommending broadcast content into categories by broadcasting time slots; and displaying the classified results recommending broadcast content on a screen.

### ADVANTAGEOUS EFFECTS

According to one or more embodiments, the buddy list of the buddies watching the same broadcasting program as the user, or the buddy list of the buddies watching different broadcasting programs than the user can be exhibited via the network while watching the broadcasting program. By using the buddy list, the user can notify a broadcasting program currently being watched by the user to a buddy who is watching a different broadcasting program than the user, and by using the EPG information, the user may recommend a broadcasting program. Since multimedia contents are provided these days in large amount, recommendation of a broadcasting program can be useful information to users that hesitate to select multimedia contents. Also, the user builds a social network by using the buddy list so that the user can feel that the user is watching the TV with others although the user is watching the TV alone, and after the broadcasting program has ended, the user can discuss the broadcasting program with the buddies who have watched the same broadcasting program, thereby forming a high rapport with them.

### BEST MODE

To achieve the above and/or other aspects, one or more embodiments may include a method of recommending broadcast contents, performed by a media content play-back device of a first user The method includes the operations of logging a broadcast contents viewing pattern of the first user to generate a profile of the first user; transmitting the generated profile of the first user through a network to an external server; receiving, from the server, results recommending one or more broadcast content element(s) that reflects (reflect) a preference correlation based on the profile of the first user and the profile or the profiles of one or more second users registered in an account of the first user; classifying the received results recommending broadcast content into categories by broadcasting time slots; and displaying the classified results recommending broadcast content on a screen.

With respect to content currently being broadcast, from among the classified one or more recommended broadcast contents that are displayed, the operation of displaying the recommendation result may include the operation of also displaying on the screen the number of buddies watching the same broadcast content.

With respect to the content currently being broadcast, from among the classified one or more recommended broadcast contents that are displayed, the operation of displaying the recommendation result may include the operation of also displaying a broadcasting elapsed status of the content currently being broadcast.

The operation of displaying the recommendation result may include the operation of displaying the recommendation result about the classified one or more recommended broadcast contents on an area that is the same as a location area of the screen on which Electronic Program Guide (EPG) information is displayed.

The method may further include the operations of recording one or more broadcast contents from among the classified one or more recommended broadcast contents that are displayed on the screen, reminding the first user about a start of the one or more broadcast contents before a start time, or recommending the one or more broadcast contents to the at least one second user registered in the account of the first user.

The method may further include the operations of receiving a signal indicating a broadcast contents recommendation request from the first user; updating the profile of the first user according to the received signal; generating contents profiles with respect to broadcast contents of all channels obtained from EPG information; and extracting a recommendation result about one or more broadcast contents, wherein a preference correlation between the updated profile of the first user and the generated contents profiles is reflected in the recommendation result.

The method may further include the operation of combining the recommendation result about the one or more recommended broadcast contents, wherein the recommendation result is received from the server, with the extracted recommendation result about the one or more broadcast contents, thereby performing content-based collaborative filtering.

To achieve the above and/or other aspects, one or more embodiments may include a method of recommending broadcast contents, the method performed by a server which is connected to a media content play-back device of a first user via a network, including the operations of receiving a profile of the first user generated by logging a broadcast contents viewing pattern of the first user from the media content play-back device; obtaining a user list, which includes one or more second users registered in an account of the first user, from a database arranged in the server; collecting each of second user profiles from the one or more second users of the obtained user list; calculating a recommendation result about one or more broadcast contents in which a preference correlation between the profile of the first user and the collected second user profiles is reflected; and transmitting the calculated recommendation result about the one or more broadcast contents to the media content play-back device of the first user.

The method may further include the operation of calculating the number of the one or more second users watching broadcast content that is the same as broadcast content currently being broadcast, from among the one or more broadcast contents of the calculated recommendation result.

To achieve the above and/or other aspects, one or more embodiments may include a broadcast contents recommending apparatus of a media content play-back device of a user, the broadcast contents recommending apparatus including a user profiling unit to log a broadcast contents viewing pattern of the first user and to generate a profile of the first user; a user profile uploader to transmit the generated profile of the first user through a network to an external server; a receiving unit to receive, from the server, results recommending one or more broadcast content element(s) that reflects (reflect) a preference correlation based on the profile of the first user and the profile or the profiles of one or more second users registered in an account of the first user; a screen control unit to classify the received results recommending broadcast content into categories by broadcasting time slots; and a screen output unit to display on a screen the classified results recommending broadcast content.

With respect to content currently being broadcast, from among the classified one or more recommended broadcast contents that are displayed, the screen output unit may also display on the screen the number of buddies watching the same broadcast content.

With respect to content currently being broadcast, from among the classified one or more recommended broadcast contents that are displayed, the screen output unit may also display a broadcasting elapsed status of the content currently being broadcast.

The screen output unit may display the recommendation result about the classified one or more recommended broadcast contents on an area that is the same as a location area of the screen on which EPG information is displayed.

The broadcast contents recommending apparatus may further include a broadcast contents processing unit that records one or more broadcast contents from among the classified one or more recommended broadcast contents that are displayed on the screen, reminds the first user about a start of the one or more broadcast contents before a start time, or recommends the one or more broadcast contents to the at least one second user registered in the account of the first user.

The broadcast contents recommending apparatus may further include a user interface unit to receive a signal indicating a broadcast contents recommendation request from the first user; a profile update unit to update the profile of the first user according to the received signal; a contents profiling unit to generate contents profiles with respect to broadcast contents of all channels obtained from EPG information; and a content-based recommending unit to extract a recommendation result about one or more broadcast contents, wherein a preference correlation between the updated profile of the first user and the generated contents profiles is reflected in the recommendation result.

The broadcast contents recommending apparatus may further include a hybrid recommending unit to combine the recommendation result about the one or more recommended broadcast contents, wherein the recommendation result is received from the server, with the extracted recommendation result about the one or more broadcast contents, wherein the extracted recommendation result is extracted from the content-based recommending unit, thereby performing content-based collaborative filtering.

To achieve the above and/or other aspects, one or more embodiments may include a broadcast contents recommending server for recommending broadcast contents to a media content play-back device of a first user connected via a network, the broadcast contents recommending server including a user profile receiving unit to receive a profile of the first user generated by logging a broadcast contents viewing pattern of the first user from the media content play-back device; a buddy managing unit to obtain a user list, which includes one or more second users registered in an account of the first user, from a database arranged in the server; a buddy profile collecting unit to collect each of second user profiles from the one or more second users of the obtained user list; a collaborative -filter set the based recommending unit to calculate a recommendation result about one or more broadcast contents in which a preference correlation between the profile of the first user and the collected second user profiles is reflected; and a transmitting unit to transmit the calculated recommendation result about the one or more broadcast contents to the media content play-back device of the first user.

The broadcast contents recommending server may further include a buddy watching information processing unit to calculate the number of the one or more second users watching broadcast content that is the same as broadcast content currently being broadcast, from among the one or more broadcast contents of the calculated recommendation result.

To achieve the above and/or other aspects, one or more embodiments may include a computer readable recording medium having recorded thereon a program for executing the method of recommending broadcast contents, performed by a media content play-back device of a first user, and the method of recommending broadcast contents, wherein the method is performed by a server connected to a media content play-back device of a first user via a network.

### MODE OF THE INVENTION

The attached drawings for illustrating exemplary embodiments of the present invention are referred to in order to gain a sufficient understanding of the present invention, the merits thereof, and the objectives accomplished by the implementation of the present invention.

The embodiments relate to a method and apparatus for recommending a highly reliable broadcasting program by referring to an already built social network in a system of a device including a personal video recorder (PVR), a digital TV, a portable multimedia player (PMP) which can record and reproduce broadcasting programs, wherein the system checks a user's viewing habits and patterns, thereby recommending a preferable broadcasting program to the user.

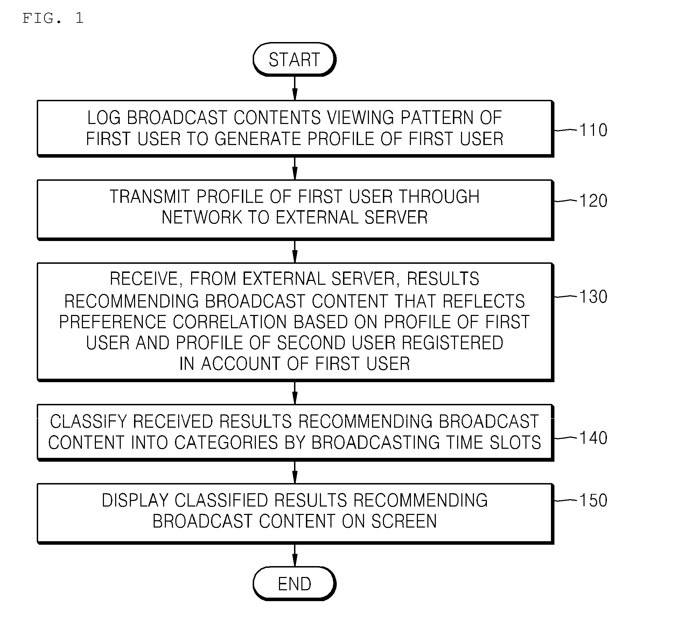

FIG. 1 is a flowchart of a method of recommending broadcast contents, performed by a media content play-back device of a user, according to an embodiment.

Referring to FIG. 1, the method of recommending broadcast contents, performed by the media content play-back device of a first user, according to an embodiment, includes operations of logging a broadcast contents viewing pattern of the first user to generate a profile of the first user (operation 110), transmitting the generated profile of the first user through a network to an external server (operation 120), receiving, from the server, results recommending one or more broadcast content element(s) that reflects (reflect) a preference correlation based on the profile of the first user and the profile or the profiles of one or more second users registered in an account of the first user (operation 130), classifying the received results recommending broadcast content into categories by broadcasting time slots (operation 140), and displaying the classified results recommending broadcast content on a screen (operation 150).

As described above, the embodiments suggest a framework that uses an already built social network, thereby obtaining information about a broadcasting program currently being watched by a buddy when program recommendation is performed, and that refers to such obtained information, thereby recommending a highly reliable and user preferable broadcasting program.

In order to provide a personalized recommending service, it is assumed that each user logs into a corresponding user account when each user turns on a TV. Also, it is assumed that each user may register and delete at least one friend from a buddy list through various social networks on a website.

First, in operation 110, a behavior pattern about broadcast contents such as a viewing habit of or contents which are watched at a high frequency by a user is logged. Then, a user profile with respect to broadcasting programs and the like is generated by using a logged log file. This user profile is basic information used to recommend broadcasting programs, and is base data for the calculation of a user preference degree. Thus, the factors considered to generate a user profile affect a recommending function. For example, the number of times a specific broadcasting program is watched, and which part in an entire broadcasting program corresponds to a part watched by a user may be determined, and from among a watched broadcasting program and a recorded broadcasting program, the watched broadcasting program may be determined to be more important than the merely recorded broadcasting program.

In operation 120, the user profile is transmitted through a network to an external server. As suggested by the embodiments, a server for managing a buddy list is necessary to obtain a recommended broadcasting program through a social network. The server provides a function by which the user's buddy may be added to and deleted from the buddy list, and includes a buddy management module that manages a buddy database, a user profile receiving module that receives and manages a user profile with respect to a recommendation request, and a buddy profile collecting module that requests each of buddies in the buddy list for a profile, receives the profile and manages the received profile.

In operation 130, a recommendation result about one or more recommended broadcasting programs is received, wherein a preference correlation is reflected in the recommendation result based on the user profile and a second user profile of at least a second user registered in a buddy list of the user. That is, a correlation between buddy profiles collected by the server and the uploaded user profile is analyzed so that a user preferable broadcasting program from among a large number of broadcasting programs is recommended. In a personalized TV recommendation field, a conventional method that has been technically studied to recommend broadcasting programs is broadly divided into a content-based reasoning method, a collaborative filtering method, and a hybrid recommendation method. In operation 130, the commendation result received from the server may correspond to the collaborative filtering method. However, unlike in the conventional method, in order to recommend broadcasting programs highly match a user preference, the present embodiments use a method of obtaining information about broadcasting programs currently being watched by the user's buddies, wherein the information is already stored in a website, and then reflecting the information in a recommendation algorithm.

When a user turns on a TV (such as an Internet Protocol TV (IPTV not shown)) connected to a network, (not shown) and attempts to check whether user preferable broadcasting programs are currently being broadcast or are to be broadcast, a device (not shown) in the TV may determine user propensity by referring to a watching pattern of the user, may generate a user profile and upload this to a server, and may reflect whether already registered buddies watch corresponding broadcasting programs in a recommendation algorithm, thereby extracting a recommended broadcasting program.

In addition, the content-based reasoning method recommends a broadcasting program most similar to a broadcasting program that was watched by a user in the past. To perform the content-based reasoning method, a broadcasting program is modelled according to various factors such as a genre, a broadcasting channel, a producer, characters, etc. This modeling is referred to as program profiling or contents profiling. The content-based reasoning method performs modeling with respect to programs to be broadcast according to various factors, and refers to a correlation between a profile of a program previously watched by a user and a profile of a program to be broadcast, thereby recommending a broadcasting program in an Electronic Program Guide (EPG). The content-based reasoning method may be performed in a local device of a TV, and may not require a device connected to a network.

The collaborative filtering method checks a viewing pattern and a watching content of high frequency of a user, and learns a preference correlation between users, thereby recommending a specific broadcasting program. That is, the collaborative filtering method finds other users which have preferences similar to that of an individual user, thereby recommending a broadcasting program to the individual user, wherein the broadcasting program is preferred by the users having the similar preferences.

A representative successful case with respect to the collaborative filtering method is a site named Amazon.com that sells books, DVDs, etc. When a user attempts to purchase a specific book, Amazon.com provides a service recommending other books purchased by other users who already purchased that specific book, thereby increasing a purchase success ratio. In general, according to the collaborative filtering method, a TV device transmits a user profile to a server, and the server performs a collaborative recommendation algorithm such that a device connected to a network is necessary.

Meanwhile, the hybrid recommendation method mixes the content-based reasoning method and the collaborative filtering method, and uses the mixed method. This hybrid recommendation method aims to enhance a recommending function, and is also referred to as a content-based collaborative filtering method.

In operation 140, the one or more recommended broadcasting programs in the received recommendation result are classified into categories by broadcasting time slots. With respect to providing the recommended broadcasting program, operation 140 aims to provide a user interface by using a temporal factor regarding a program broadcasting timetable.

In general, with respect to providing recommended broadcasting programs, these recommended broadcasting programs may be aligned in order of recommendation similarity, or may be aligned to be browsed according to a channel or a genre. However, the embodiment of FIG. 1 selects the temporal factor by considering a user request and a user interaction. For example, the one or more recommended broadcasting programs are categorized into a program currently being broadcast, a program to be broadcast in 30 minutes, and a program to be broadcast at a late time (e.g., around midnight).

In operation 150, a recommendation result about the classified one or more recommended broadcasting programs is displayed on a screen. At this time, with respect to the program currently being broadcast from among the classified one or more recommended broadcasting programs that are displayed on the screen, the number of buddies watching the same broadcasting program may also be displayed on the screen. Thus, a broadcasting program watched by as many buddies as possible may match an individual user's interest propensity, and such a broadcasting program may be a common subject shared between the buddies in on/offline dialogues at a later time.

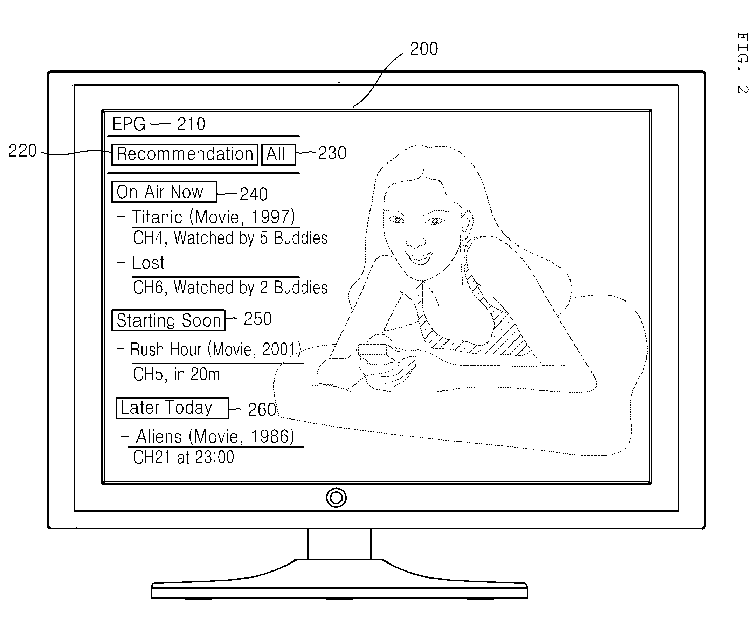

Hereinafter, an EPG screen including such a recommendation result will be described with reference to FIG. 2.

FIG. 2 is an example of a screen for broadcast contents recommendation, according to an embodiment.

Referring to FIG. 2, an EPG screen 210 may be a (translucent) sub-screen displayed on a side of a TV screen 200. However, it is understood that the sub-screen may be displayed on any portion of TV screen. From among menus related to an EPG, a sub-menu may include a recommendation 220 and an all-menu 230. The all-menu 230 displays a general EPG screen. The screen of FIG. 2 corresponds to a result screen when the recommendation 220 is selected.

According to the related art, with respect to display of a recommendation result, enabling it to be browsed by a user, recommended broadcasting programs are displayed in order of recommendation similarity degree, or in categories classified into a broadcasting channel, a genre, etc.

However, the screen is constituted in such a manner that browsing may be performed by using a temporal factor, as illustrated in FIG. 2. For example, the screen may include a recommended program currently being broadcast that may be immediately watched by a user, a recommended program to be broadcast soon, and a recommended program to be broadcast around midnight so that the user may watch it late at night. Accordingly, the user is guided to watch the recommended broadcasting programs according to time.

Meanwhile, when the recommended broadcasting programs are displayed on the screen, a broadcasting elapsed status of the recommended program currently being broadcast may be also displayed on the screen so as to assist a user to determine whether or not to watch a program of which a broadcasting time is substantially elapsed.

Recommended broadcasting programs may be displayed on the same area (or different area) of the screen by using hot-keys that enable a user to see entire EPG information, thereby naturally exposing the recommended broadcasting programs to the user.

Referring back to FIG. 2, with respect to the recommended program currently being broadcast (that is, on air now 240), it is possible to check that a movie entitled "Titanic" is being watched by 5 buddies, and a TV drama series entitled "Lost" is being watched by 2 buddies. At this time, for the recommended program currently being broadcast from among the recommended broadcasting programs, a broadcasting elapsed status may also be displayed.

In the case of the recommended program to be broadcast soon (that is, starting-soon-menu 250), the EPG screen 210 shows that a movie entitled "Rush Hour" is recommended and will start in 20 minutes. Meanwhile, in the case of the recommended program to be broadcast late at night (that is, later today 260 (later-today-menu 250), it is possible to check that a movie entitled "Aliens" will start at 23:00.

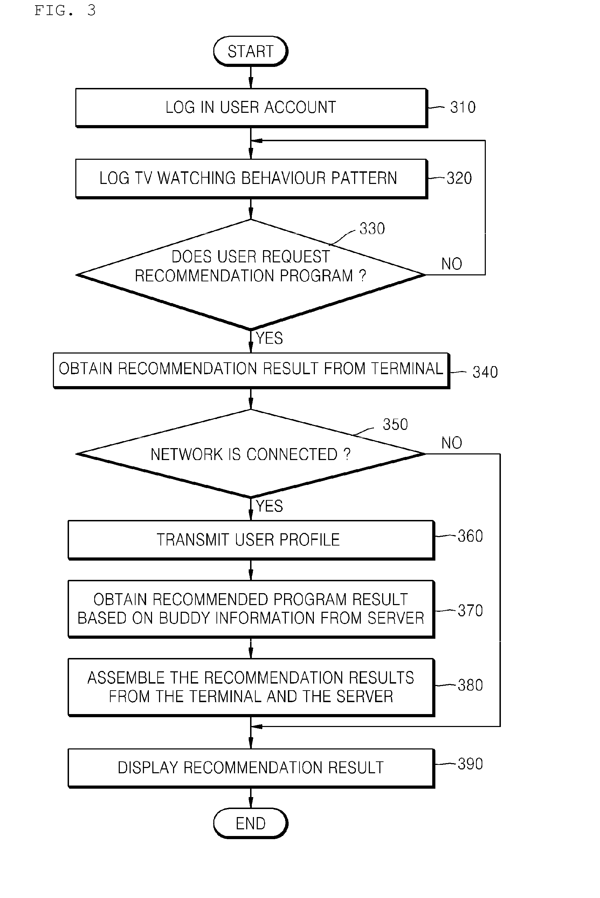

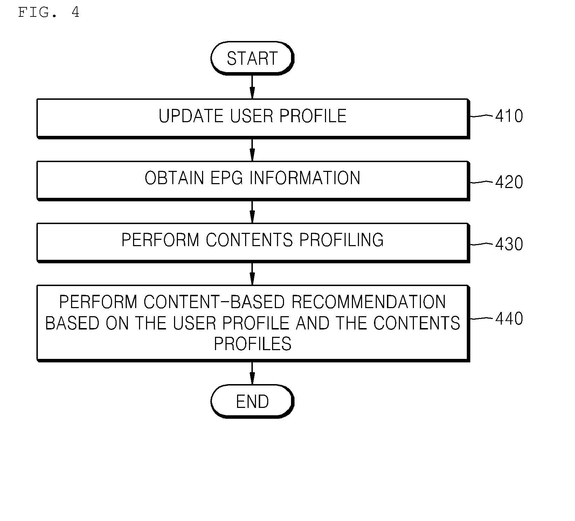

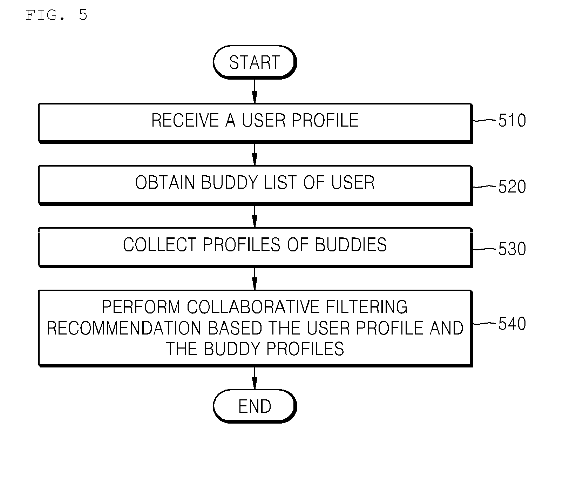

FIG. 3 is a flowchart of operational procedures in a user's media content play-back device that recommends broadcast contents according to another embodiment. Meanwhile, FIG. 4 is a flowchart of operational procedures for obtaining a recommendation result from a terminal, and FIG. 5 is a flowchart of operational procedures for obtaining a recommendation result based on buddy information from a server. The flowchart of FIG. 5 corresponds to operation 370 of the flowchart of FIG. 3.

Referring to FIG. 3, a user turns on a TV and logs into his or her corresponding account (operation 310). A viewing pattern of the user changing channels is logged (operation 320), and the logged viewing pattern is used to generate a user profile. Whether the user requests a recommendation program is determined (operation 330), and in the case where the user requests the recommendation program, a recommendation result is obtained from a terminal (operation 340). That is, the recommendation program is extracted by the terminal itself.

The operational procedures for obtaining the recommendation result from the terminal will now be described with reference to FIG. 4. In the case where the user requests the recommendation program, the terminal updates a user profile (operation 410). After that, the terminal obtains EPG information about programs to be broadcast (operation 420), and performs profiling with respect to programs broadcast in all channels, thereby generating a contents profile (operation 430). Next, the terminal performs a recommendation algorithm by inputting the user profile and the contents profile thereto, and extracts the recommendation result (operation 440). Referring back to FIG. 3, after the recommendation result is obtained from the terminal (operation 340), a current connection status with a network is checked (operation 350). As a result of the check, if it is not possible to use the network, the recommendation result obtained from the terminal is displayed to the user (operation 390), and a recommendation function is ended.

However, if it is possible to use the network now, the updated user profile is transmitted to the server (operation 360). That is, the server is requested to transmit a recommended program. An operational procedure for extracting a recommended program from the server (operation 340) will now be described with reference to FIG. 5. The server receives the user profile and user information (operation 510), obtains a buddy list of the user via a database (operation 520), requests buddy profiles to each of corresponding terminals, and collects the buddy profiles (operation 530). The server performs a collaborative filtering recommendation algorithm by inputting the collected buddy profiles, and the user profile, and transmits a recommendation result to a user terminal (operation 540). The user terminal combines the recommendation result about recommended programs, wherein the recommendation result is received from the server, with the extracted recommendation result about recommended programs (operation 380), thereby performing a content-based collaborative filtering. As a result, a final recommendation result is displayed on a screen (operation 390).

When the final recommendation result is displayed on the screen, the number of buddies watching the recommended broadcasting programs may also be displayed on the screen, so further satisfy the user with respect to the final recommendation result.

Also, after the final recommendation result is displayed, a function for recording one or more broadcasting programs from among the recommended broadcasting programs that are displayed on the screen, or a function for reminding the user of a start of a broadcasting program from among the recommended broadcasting programs may be set. Also, one or more broadcasting programs from among the recommended broadcasting programs may be recommended to another user included in the buddy list of the user.

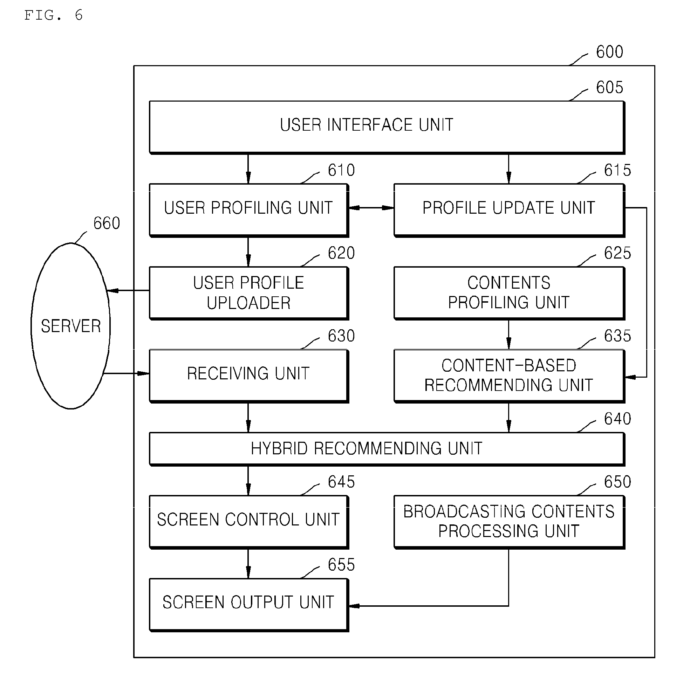

FIG. 6 is a block diagram of a broadcast content recommending apparatus 600 in a media content play-back device of a user, according to another embodiment.

Referring to FIG. 6, the broadcast contents recommending apparatus 600 in a media content play-back device of a first user, according to an embodiment of, includes a user profiling unit 610 that logs a broadcast contents viewing pattern of the first user and then generates a profile of the first user, a user profile uploader 620 that transmits the generated profile of the first user through a network to an external server 660, and a receiving unit 630 that receives, from the server 660, results recommending one or more broadcast content element(s) that reflects (reflect) a preference correlation based on the profile of the first user and the profile or the profiles of one or more second users registered in an account of the first user. Also, the broadcast contents recommending apparatus 600 may include a screen control unit 645 that classifies the received results recommending broadcast content into categories by broadcasting time slots, and a screen output unit 655 that displays on a screen the classified results recommending broadcast content.

The user profiling unit 610 is a module that logs a behavior pattern of a user watching a TV, and analyzes this behavior pattern. In order to generate a user profile, the user profiling unit 610 considers the number of times a specific broadcasting program is watched, which part in an entire broadcasting program corresponds to a part watched by the user, and the like.

The user profile uploader 620 is a module that uploads the user profile and user information to the server 660 so that correlation between the user profile of the user currently logged in and profiles of buddies may be calculated.

The receiving unit 630 is a network interface module that receives recommendation result data transmitted from the server 660 via a network, for example, Internet. However it is understood that it can be wired or wireless network.

The screen control unit 645 controls the screen so as to enable the user to browse the one or more recommended broadcast contents by using a temporal factor. For example, the one or more recommended broadcast contents may be classified into a recommended program currently being broadcast, a recommended program to be broadcast soon, and a recommended program to be broadcast late at night. Hence, the user may select and watch such recommended broadcasting programs according to time.

The screen output unit 655 is an image display module that displays on the screen a recommendation result about the classified recommended broadcasting programs.

Also, the broadcast contents recommending apparatus 600 may further include a broadcast contents processing unit 650. This broadcast contents processing unit 650 is a module that enables various application operations including a recording function, a pre-recording function, a reminding function, a recommending function, and the like to be processed with respect to the recommended broadcasting programs that are displayed on the screen.

Meanwhile, the broadcast contents recommending apparatus 600 may further include a user interface unit 605 that receives a signal indicating a broadcasting program recommendation request from the user, a profile update unit 615 that updates the user profile according to the received signal, and a contents profiling unit 625 that generates contents profiles with respect to broadcasting programs of all channels obtained from EPG information. The contents profiling unit 625 is a module that performs profiling with respect to each broadcasting program obtained from EPG data. When program profiling is performed, various kinds of additional information including a broadcasting time, a broadcasting channel, a title, a genre, characters, a director, a producer, and/or the like may be considered.

The broadcast contents recommending apparatus 600 may further include a content-based recommending unit 635 that analyzes a correlation between the contents profiles and the user profile, and performs content-based recommendation.

Also, the broadcast contents recommending apparatus 600 may further include a hybrid recommending unit 640 that combines the recommendation result about recommended programs, wherein the recommendation result is received from the server 660, with the recommendation result about recommended programs, wherein the recommendation result is extracted from the content-based recommending unit 635, thereby performing content-based collaborative filtering.

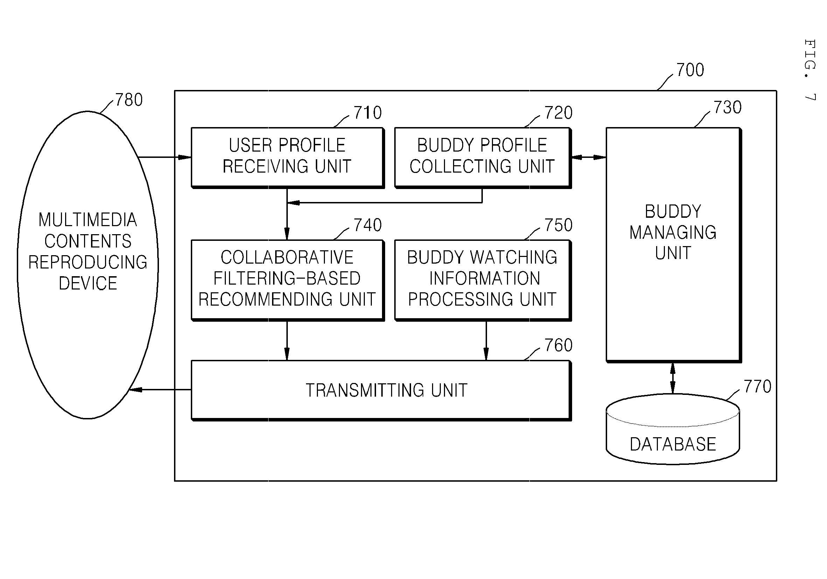

FIG. 7 is a block diagram of a broadcast contents recommending server 700 that recommends broadcast contents to a media content play-back device 780 of a user, according to another embodiment.

Referring to FIG. 7, the broadcast contents recommending server 700 that recommends broadcast contents to the media content play-back device 780 of a first user, according to the embodiment, includes a user profile receiving unit 710 that receives a profile of the first user generated by logging a broadcast contents watching pattern of the first user from the media content play-back device 780, a buddy managing unit 730 that obtains a buddy list, which includes one or more second users registered in an account of the first user, from a database 770 arranged in the broadcast contents recommending server 700, a buddy profile collecting unit 720 that collects each of second user profiles from the one or more second users included in the obtained buddy list, a collaborative filtering-based recommending unit 740 that calculates a recommendation result about one or more broadcast contents on which preference correlation between the profile of the first user and the collected second user profiles is reflected, and a transmitting unit 760 that transmits the calculated recommendation result about the one or more broadcast contents to the media content play-back device 780.

Also, the broadcast contents recommending server 700 may further include a buddy watching information processing unit 750 that calculates the number of buddies who watch broadcast content that is the same as broadcast content currently being broadcast from among the one or more broadcast contents of the calculated recommendation result.

As described above, one or more of the above embodiments regarding the method of recommending broadcast contents provide the framework that can calculate the recommendation result about highly reliable broadcasting programs by referring to at least one piece of friend information that is stored in a website by a user, so that one or more of the above embodiments can enhance a recommending function with respect to TV programs.

Also, one or more of the above embodiments provide an intuitive user interface enabled to categorize recommended broadcasting programs according to time and display them on a screen, and to show the number of buddies watching the recommended broadcasting programs, so that one or more of the above embodiments can efficiently use the recommending function.

Meanwhile, the method of recommending broadcast contents according to the one or more of the above embodiments can be written as computer programs and can be implemented in general-use digital computers that execute the programs using a computer readable recording medium.

In addition, a data structure used in the one or more of the above embodiments can be written in a computer readable recording medium.

Examples of the computer readable recording medium include magnetic storage media (e.g., ROM, floppy disks, hard disks, etc.), and optical recording media (e.g., CD-ROMs, or DVDs).

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A method of recommending broadcast contents, performed by a media content play-back device of a first user, the method comprising:
- logging a broadcast contents viewing pattern of the first user to generate a profile of the first user;
- transmitting the generated profile of the first user through a network to a server;
- receiving, from the server, results recommending one or more broadcast content element(s) that reflects (reflect) a preference correlation based on the profile of the first user and the profile or the profiles of one or more second users registered in an account of the first user;
- classifying the received results recommending broadcast content into categories by broadcasting time slots; and
- displaying the classified results recommending broadcast content on a screen.

2. The method of claim 1, wherein, with respect to content currently being broadcast, from among the classified one or more recommended broadcast contents that are displayed, the displaying of the recommendation result comprises also displaying on the screen the number of buddies watching the same broadcast content.

3. The method of claim 2, wherein, with respect to the content currently being broadcast, from among the classified one or more recommended broadcast contents that are displayed, the displaying of the recommendation result comprises also displaying a broadcasting elapsed status of the content currently being broadcast.

4. The method of claim 3, wherein the displaying of the recommendation result comprises displaying the recommendation result about the classified one or more recommended broadcast contents on an area that is the same as a location area of the screen on which EPG (Electronic Program Guide) information is displayed.

5. The method of claim 4, further comprising:
- recording one or more broadcast contents from among the classified one or more recommended broadcast contents that are displayed on the screen,
- reminding the first user about a start of the one or more broadcast contents before a start time, or
- recommending the one or more broadcast contents to the at least one second user registered in the account of the first user.

6. The method of claim 1, further comprising:
receiving a signal indicating a broadcast contents recommendation request from the first user;
updating the profile of the first user according to the received signal;
generating contents profiles with respect to broadcast contents of all channels obtained from EPG information; and
extracting a recommendation result about one or more broadcast contents, wherein a preference correlation between the updated profile of the first user and the generated contents profiles is reflected in the recommendation result.

7. The method of claim 6, further comprising combining the recommendation result about the one or more recommended broadcast contents, wherein the recommendation result is received from the server, with the extracted recommendation result about the one or more broadcast contents, thereby performing content-based collaborative filtering.

8. A method of recommending broadcast contents, the method performed by a server which is connected to a media content play-back device of a first user via a network, the method comprising:
- receiving a profile of the first user generated by logging a broadcast contents viewing pattern of the first user from the media content play-back device;
- obtaining a user list, which comprises one or more second users registered in an account of the first user;
- collecting each of second user profiles from the one or more second users of the obtained user list;
- calculating a recommendation result about one or more broadcast contents in which a preference correlation between the profile of the first user and the collected second user profiles is reflected; and
- transmitting the calculated recommendation result about the one or more broadcast contents to the media content play-back device of the first user.

9. The method of claim 8, further comprising calculating the number of the one or more second users watching broadcast content that is the same as broadcast content currently being broadcast, from among the one or more broadcast contents of the calculated recommendation result.

10. A broadcast contents recommending apparatus of a media content play-back device of a user, the broadcast contents recommending apparatus comprising:
- a user profiling unit to log a broadcast contents viewing pattern of the first user to generate a profile of the first user;
- a user profile uploader to transmit the generated profile of the first user through a network to an external server;
- a receiving unit to receive a recommendation result about one or more recommended broadcast contents from the server, wherein a preference correlation between the profile of the first user and a second user profile of at least a second user registered in an account of the first user is reflected in the recommendation result;
- a screen control unit to classify the received results recommending broadcast content into categories by broadcasting time slots; and
- a screen output unit to display on a screen the classified results recommending broadcast content.

11. The broadcast contents recommending apparatus of claim 10, wherein, with respect to content currently being broadcast, from among the classified one or more recommended broadcast contents that are displayed, the screen output unit also displays on the screen the number of buddies watching the same broadcast content.

12. The broadcast contents recommending apparatus of claim 11, wherein, with respect to content currently being broadcast, from among the classified one or more recommended broadcast contents that are displayed, the screen output unit also displays a broadcasting elapsed status of the content currently being broadcast.

13. The broadcast contents recommending apparatus of claim 12, wherein the screen output unit displays the recommendation result about the classified one or more recommended broadcast contents on an area that is the same as a location area of the screen on which EPG information is displayed.

14. The broadcast contents recommending apparatus of claim 13, further comprising a broadcast contents processing unit that records one or more broadcast contents from among the classified one or more recommended broadcast contents that are displayed on the screen, reminds the first user about a start of the one or more broadcast contents before a start time, or recommends the one or more broadcast contents to the at least one second user registered in the account of the first user.

15. The broadcast contents recommending apparatus of claim 10, further comprising:
- a user interface unit to receive a signal indicating a broadcast contents recommendation request from the first user;
- a profile update unit to update the profile of the first user according to the received signal;
- a contents profiling unit to generate contents profiles with respect to broadcast contents of all channels obtained from EPG information; and
- a content-based recommending unit to extract a recommendation result about one or more broadcast contents, wherein a preference correlation between the updated profile of the first user and the generated contents profiles is reflected in the recommendation result.

16. The broadcast contents recommending apparatus of claim 15, further comprising a hybrid recommending unit to combine the recommendation result about the one or more recommended broadcast contents, wherein the recommendation result is received from the server, with the extracted recommendation result about the one or more broadcast contents, wherein the extracted recommendation result is extracted from the content-based recommending unit, thereby performing content-based collaborative filtering.

17. A broadcast contents recommending server for recommending broadcast contents to a media content play-back device of a first user connected via a network, the broadcast contents recommending server comprising:
- a user profile receiving unit to receive a profile of the first user generated by logging a broadcast contents viewing pattern of the first user, from the media content play-back device;
- a buddy managing unit to obtain a user list, which comprises one or more second users registered in an account of the first user, from a database arranged in the server;
- a buddy profile collecting unit to collect each of second user profiles from the one or more second users of the obtained user list;
- a collaborative filtering-based recommending unit to calculate a recommendation result about one or more broadcast contents in which a preference correlation between the profile of the first user and the collected second user profiles is reflected; and
- a transmitting unit to transmit the calculated recommendation result about the one or more broadcast contents to the media content play-back device of the first user.

18. The broadcast contents recommending server of claim 17, further comprising a buddy watching information processing unit to calculate the number of the one or more second users watching broadcast content that is the same as broadcast content currently being broadcast, from among the one or more broadcast contents of the calculated recommendation result.

19. A computer readable recording medium having recorded thereon a program for executing the method of any one of claims 1 to 9.
